Europäisches Patentamt

European Patent Office

Office européen des brevets

(11) Numéro de publication: **0 173 618**
A1

# (12) DEMANDE DE BREVET EUROPEEN

(21) Numéro de dépôt: 85401590.6

(22) Date de dépôt: 02.08.85

(51) Int. Cl.⁴: **H 05 B 6/10, C 03 B 37/04**

(30) Priorité: 03.08.84 FR 8412335

(43) Date de publication de la demande: 05.03.86
Bulletin 86/10

(84) Etats contractants désignés: **AT BE CH DE FR GB IT LI NL SE**

(71) Demandeur: **SOCIETE D'APPLICATIONS DE LA PHYSIQUE MODERNE ET DE L'ELECTRONIQUE SAPHYMO-STEL, 29, avenue Carnot, F-91301 Massy (FR)**

(72) Inventeur: **Reboux, Jean, THOMSON-CSF SCPI 173, bld Haussmann, F-75379 Paris Cedex 08 (FR)**
Inventeur: **Delage, Daniel, THOMSON-CSF SCPI 173, bld Haussmann, F-75379 Paris Cedex 08 (FR)**

(74) Mandataire: **Chaverneff, Vladimir et al, THOMSON-CSF SCPI 173, Bld Haussmann, F-75379 Paris Cedex 08 (FR)**

(54) Inducteur à culasse magnétique pour équipement de fabrication de fibres de verre.

(57) L'inducteur de l'invention (4) est installé dans un équipement de fibrage à centrifugeur (1) chauffé par un chauffage principal (3) à gaz et par un chauffage d'appoint (4) à induction. Pour augmenter le rendement de l'inducteur, on dispose un élément de canalisation magnétique (7) entre l'inducteur et le chauffage principal.
Application: fabrication de laine de verre.

1

## INDUCTEUR A CULASSE MAGNETIQUE POUR
## EQUIPEMENT DE FABRICATION DE FIBRES DE VERRE

La présente invention se rapporte à un inducteur à culasse magnétique pour équipement de fabrication de fibres de verre.

La fabrication de fibres de verre, notamment pour l'isolation thermique, fait en général appel à un équipement comportant essentiellement un centrifugeur dont la paroi latérale est chauffée par un dispositif de chauffage mixte comprenant un dispositif de chauffage principal à brûleurs à gaz, et un chauffage d'appoint par induction.

Etant donné, qu'en particulier, le dispositif de chauffage principal est situé à proximité du centrifugeur et du dispositif de chauffage d'appoint, et qu'il constitue une masse métallique importante, absorbant une partie non négligeable de l'énergie fournie par le dispositif de chauffage d'appoint, le rendement de ce dispositif de chauffage d'appoint est faible, et sa zone d'action utile sur la paroi latérale du centrifugeur est réduite.

La présente invention a pour objet un dispositif permettant d'augmenter le rendement du chauffage d'appoint, ainsi que, le cas échéant, sa zone d'action utile, sans pour autant modifier les éléments de l'équipement de fabrication, ni apporter pratiquement aucune gêne au processus de fabrication.

Le dispositif conforme à l'invention comporte un élément en matériau magnétique de canalisation de flux d'inducteur canalisant au moins une partie du flux de fuite vers le centrifugeur de l'équipement, cet élément magnétique étant peu dissipatif en énergie à la fréquence du courant alimentant l'inducteur, et disposé à proximité de l'inducteur du dispositif de chauffage d'appoint et à proximité du dispositif de chauffage principal.

Selon un mode de réalisation préféré de l'invention, ledit élément en matériau magnétique est réalisé sous forme de couronne dont l'axe est pratiquement confondu avec l'axe de rotation du centrifugeur, cette couronne étant disposée entre l'inducteur et le dispositif de chauffage principal, le diamètre intérieur de cette couronne étant sensiblement égal au diamètre intérieur de l'inducteur, lui-même ayant la forme générale d'une couronne.

La présente invention sera mieux comprise à la lecture de la description détaillée de plusieurs modes de réalisation, pris comme exemples non limitatifs, et illustrés par le dessin annexé, sur lequel :

- la figure 1 est une vue en coupe simplifiée d'un équipement de fabrication de fibres de verre, selon l'art antérieur ;

- la figure 2 est une vue analogue à celle de la figure 1, sur laquelle on a représenté les lignes de flux magnétique engendré par l'inducteur du dispositif de chauffage d'appoint ;

- la figure 3 est une vue analogue à celle de la figure 2, mais avec le dispositif conforme à l'invention ;

- les figures 4 à 6 sont des vues simplifiées et partielles de différents modes de réalisation du dispositif conforme à l'invention ;

- la figure 7 est une vue en coupe simplifiée d'un équipement muni du dispositif conforme à l'invention, montrant l'implantation de ce dispositif ;

- la figure 8 est un schéma simplifié d'une variante de réalisation de l'élément magnétique de l'invention ;

- la figure 9 une vue en coupe simplifiée d'un mode de réalisation avantageux d'un équipement conforme à l'invention.

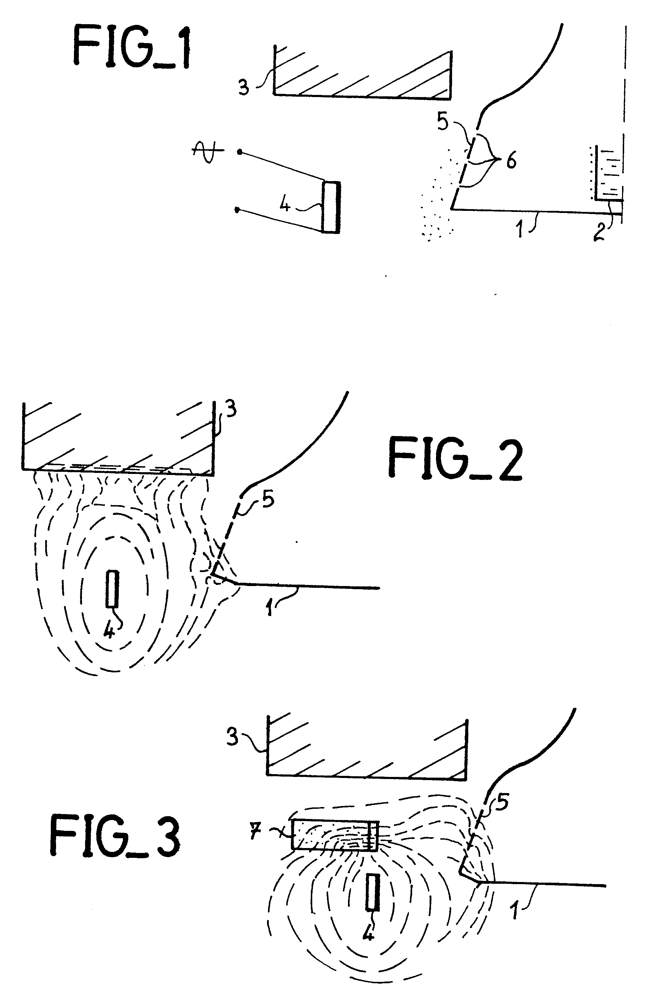

L'équipement de fabrication de fibres de verre schématiquement représenté sur la figure 1 est un équipement classique comportant essentiellement un centrifugeur 1 en acier réfractaire spécial très résistant à l'agression du verre et tournant à plusieurs milliers de tours par minute, renfermant un bol métallique 2 dans lequel est acheminé, de façon non représentée, du verre liquide, ainsi qu'un dispositif 3 de chauffage principal à brûleurs à gaz, et un dispositif de chauffage d'appoint à induction, dont on a schématiquement représenté l'inducteur 4. Les éléments 1 à 4 sont généralement à symétrie de révolution.

La partie inférieure du centrifugeur 1 a un profil légèrement tronconique s'évasant vers le bas, sa paroi latérale 5 étant percée d'un très grand nombre de trous très fins 6 (quelques dizaines par millimètre carré) par lesquels est éjecté le verre liquide, cette paroi latérale étant portée à une température de 1000 à 1050° C environ. Cette température est obtenue grâce à l'action conjuguée des deux dispositifs de chauffage 3 et 4, le dispositif 4 agissant essentiellement sur la zone inférieure de la paroi latérale du centrifugeur 1, alors que le dispositif de chauffage principal agit surtout sur la zone supérieure de cette paroi.

L'inducteur 4 de chauffage d'appoint est alimenté en puissance par une source à courant alternatif ayant une fréquence généralement comprise entre 1 et 10 kHz, le plus souvent entre 3 et 10 kHz. L'inducteur 4 est réalisé de différentes façons : soit sous la forme d'une couronne, soit sous la forme de plusieurs couronnes alimentées en série ou en parallèle et alignées selon une ou plusieurs génératrices. Afin d'homogénéïser la température de la paroi perforée du centrifugeur, on agit sur les positions relatives des éléments 1, 3 et 4, tout en ménageant suffisamment d'espace autour de la paroi latérale perforée du centrifugeur 1 afin d'assurer l'évacuation des fibres de verre.

Du point de vue électrique, l'inducteur 4 est couplé à deux induits : d'une part, le centrifugeur 1 qui constitue l'induit principal, et d'autre part la partie métallique du dispositif 3, directement placée dans le flux de fuites de l'inducteur 4, et qui constitue de ce fait un induit auxiliaire. Du fait que l'entrefer de l'induit principal, c'est-à-dire la distance le séparant de l'inducteur, ne peut qu'être important pour permettre l'écoulement des fibres de verre, le couplage de cet induit principal par rapport à l'inducteur est assez lâche, et est du même ordre de grandeur que le couplage de l'induit auxiliaire.

On a représenté sur la figure 2 en traits interrompus les lignes de flux électromagnétique engendré par l'inducteur 4 dans l'équipement décrit ci-dessus. On constate que ce flux se déploie largement pour se concentrer à la base du dispositif 3, qui est ainsi le siège de pertes par effet Joule importantes, ainsi qu'à la partie

4

inférieure de la paroi perforée 5 du centrifugeur 1. Des mesures de dissipation d'énergie ont montré que lesdites pertes Joule sont du même ordre de grandeur que la dissipation "utile" de puissance au niveau de la paroi perforée du centrifugeur. On a constaté que le rendement énergétique réel du chauffage d'apport est très faible, de l'ordre de 30 %.

Le dispositif faisant l'objet de la présente invention a pour rôle d'augmenter ce rendement énergétique par l'amélioration de l'efficacité thermique de l'inducteur par rapport à l'induit principal constitué par la paroi perforée 5 du centrifugeur, tout en atténuant corrélativement les pertes dans le dispositif 3. Selon l'invention, ce dispositif améliorant l'efficacité thermique de l'induction est un élément 7 (voir figure 3) en matériau magnétique disposé à proximité de l'inducteur 4 et du dispositif 3 de façon à dévier le plus possible de ce dernier le flux d'induction vers la paroi perforée 5 du centrifugeur 1. Bien entendu, cet élément 7 ne doit ni dissiper de puissance, ni être porté à la saturation, et sa technologie est donc fonction de la fréquence du courant alimentant l'inducteur.

L'élément 7 forme une couronne axée sur l'axe de rotation du centrifugeur, cette couronne étant continue ou discontinue, et dans ce dernier cas, les discontinuités sont, de préférence, régulièrement espacées. La couronne formée par l'élément 6 a un diamètre intérieur sensiblement égal ou supérieur à celui de l'inducteur 4, afin de ne pas gêner l'écoulement des fibres de verre, et elle est disposée à peu près à mi-chemin entre l'inducteur 4 et le dispositif de chauffage 3. Dans ce cas, comme représenté sur la figure 3, les lignes de flux d'inducteur, dans leur trajet entre l'inducteur 4 et le dispositif 3, se concentrent dans l'élément 7, et au lieu d'atteindre le dispositif 3, sont presque toutes déviées vers la paroi 5, dont la zone plus large (dans le sens de la hauteur) que dans le cas de la figure 2 peut recevoir le flux d'induction, ce qui augmente de façon importante (environ 50 %) l'efficacité du chauffage d'appoint. Ainsi, à puissance électrique égale, on peut augmenter l'étendue de la zone de la paroi 5 chauffée par induction et augmenter la température de cette zone d'environ 200° C, ou bien on peut soit diminuer la puissance électrique fournie à l'inducteur ou augmenter le diamètre intérieur de ce dernier pour obtenir sensiblement la même étendue de zone chauffée par induction que dans le cas de la figure 1, soit, en conservant la même puissance électrique, diminuer la puissance de chauffage du dispositif 3, ou bien éloigner légèrement ce dernier de l'inducteur pour augmenter encore l'efficacité de l'inducteur, soit encore, en gardant sensiblement les mêmes puissances électriques et de chauffage principal, augmenter la hauteur de la paroi perforée du centrifugeur. Il est, bien entendu, également possible de mettre en oeuvre simultanément plusieurs de ces mesures : par exemple diminution des puissances des deux dispositifs de chauffage, ou augmentation du diamètre intérieur de l'inducteur et diminution de la puissance du dispositif 3.

Le matériau constitutif de l'élément 7 doit être peu dissipatif lorsqu'il est le siège d'une induction inférieure à la saturation admise par ce matériau. Lorsque la fréquence du courant alimentant l'inducteur 4 est relativement élevée, c'est-à-dire comprise entre 5 et 10 kHz environ, ou même davantage, ce matériau est de préférence du genre "ferrite", à base d'oxydes magnétiques frittés, tels que, par exemple, ceux connus sous les dénominations de 3C6 ou 3C8 de la société PHILIPS. Lorsque la fréquence de ce courant est inférieure à environ 5 kHz, on utilise de préférence, pour réaliser l'élément 7, des tôles magnétiques de faible épaisseur, convenablement orientées, du type de celles utilisées pour réaliser les circuits magnétiques des transformateurs basse fréquence.

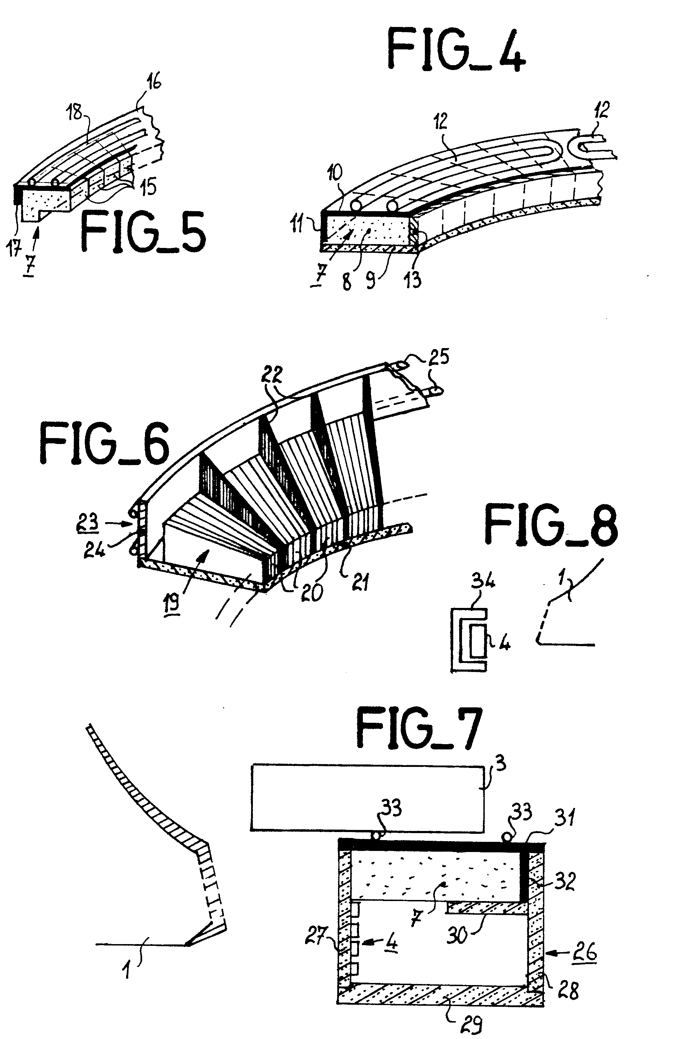

On a représenté sur la figure 4 un mode de réalisation de l'élément 7, utilisant des ferrites 8, disposées sur une plaque de base 9 en forme de couronne plane en matériau réfractaire, bon isolant électrique et thermique, robuste mécaniquement, comme par exemple un des matériaux connus sous les dénominations de "micanite", "asbestolithe", ou "syndanio". Les ferrites 8 sont de simples bâtons couramment disponibles dans le commerce, en forme de parallélépipèdes rectangles allongés. Ces bâtons sont disposés radialement sur le support 9, sur lequel ils peuvent être collés, le cas échéant, à l'aide d'une colle appropriée. De préférence, ces bâtons sont jointifs du côté de la circonférence intérieure du support 9. Les espaces en forme de coins entre les bâtons adjacents peuvent être laissés vides ou comblés, soit à l'aide de colle ou d'un matériau isolant électrique, soit à l'aide de poudre de ferrite que l'on peut compacter avec un liant approprié. Bien entendu, au lieu d'utiliser les bâtons de ferrite, on peut mouler spécialement l'élément 7 en forme de couronne, mais cela peut être plus onéreux que d'utiliser des bâtons standards. La réfrigération de l'élément 7 est assurée par une plaque 10 en métal bon conducteur thermique, par exemple du cuivre. Cette plaque 10 est en forme de couronne plane, fendue selon un rayon pour empêcher la formation de courants de Foucault. Le diamètre intérieur de la plaque 10 est sensiblement le même que celui de la couronne formée sur l'élément 7, tandis que son diamètre extérieur peut être égal ou supérieur à celui de l'élément 7. Un rebord 11 de la plaque 10 peut également, si nécessaire, recouvrir la surface circonférentielle extérieure de l'élément 7 sur au moins une partie de sa hauteur. En variante, le rebord 11 peut être remplacé par une feuille métallique, par exemple en cuivre, distincte de la plaque 10, encerclant l'élément 7, et bien entendu cette feuille doit être fendue également, selon une génératrice de la surface cylindrique formée par cette feuille, pour empêcher la formation de courants de Foucault. La plaque 10, et le cas échéant le rebord 11 ou ladite feuille métallique, sont avantageusement elles-mêmes réfrigérées par un dispositif 12 échangeur thermique réalisé par exemple à l'aide d'un tube de cuivre soudé ou brasé sur la face supérieure de la plaque 10, et le cas échéant, sur le rebord 11, ce tube étant parcouru par un fluide de refroidissement approprié. Bien entendu, pour empêcher la formation de courants de Foucault dans ce tube, on ne le conforme pas en simple boucle, mais en double "U" curviligne dont les extrémités de deux des branches incurvées sont reliées ensemble, et dont les autres extrémités sont reliées aux conduites d'amenée et d'évacuation de fluide.

La protection thermique de la face circonférentielle interne de l'élément 7 vis-à-vis du rayonnement émis par le centrifugeur est assurée par une plaque 13 en forme de portion de cylindre circulaire dont le diamètre extérieur est sensiblement égal au diamètre intérieur de l'élément 7, et dont la hauteur est égale à l'épaisseur de l'élément 7. Cette plaque 13 est avantageusement réalisée avec le même matériau isolant et réfractaire que la plaque 9, et est collée sur cette dernière et/ou sur l'élément 7.

Sur la figure 5, on a représenté partiellement une variante du mode de réalisation de la figure 4. Selon cette variante, les ferrites individuelles 15 ont une forme en "L", leur grande branche étant disposée horizontalement, et la petite étant dirigée vers le bas. Ces ferrites 15 sont assemblées de la même façon que les ferrites 8 du mode de réalisation de la figure 4, et sont recouvertes d'une plaque métallique 16 similaire à la plaque 10. Cette plaque 16 peut comporter un rebord 17, et on peut souder sur sa face supérieure un tuyau 18 d'échangeur thermique.

Le mode de réalisation de la figure 6 est prévu pour coopérer avec un inducteur fonctionnant à une fréquence relativement basse, inférieure à 5 kKz par exemple. L'élément magnétique annulaire 19, partiellement représenté sur la figure 6, est réalisé à l'aide de tôles feuilletées rectangulaires disposées parallèlement aux lignes de flux engendrées par l'inducteur, c'est-à-dire radialement. Ces tôles sont avantageusement du même type que celles utilisées pour réaliser les circuits magnétiques des transformateurs basse fréquence classiques. Aux basses fréquences, les ferrites seraient facilement saturées par le flux d'inducteur, et seraient ainsi le siège de pertes par effet Joule, ce qui serait contraire au but recherché, alors que les tôles magnétiques sont plus difficiles à saturer.

Lesdites tôles feuilletées sont isolées électriquement entre elles et assemblées en paquets de tôles 20 contenant chacun une ou plusieurs dizaines de tôles. Les paquets 20 successifs sont disposés sur une plaque de support 21 semblable à la plaque 9 et sont séparés mutuellement par des plaques 22 en matériau bon conducteur

8

thermique, par exemple en cuivre. Ces plaques 22, dont la grande surface est rectangulaire ou trapézoïdale, sont en forme de coins et sont insérées à force entre les paquets 20 successifs afin d'assurer avec ceux-ci un bon contact thermique. Les plaques 22 arrivent au niveau des paquets 20 en bas et face au centrifugeur, mais dépassent de ces paquets en haut et du côté de la face périphérique extérieure de la couronne formée par l'élément 19 (c'est-à-dire la face opposée à celle qui est en vis-à-vis du centrifugeur). Du côté de cette face périphérique extérieure, les plaques 22 sont reliées, par exemple par brasage, à un échangeur thermique 23. Cet échangeur 23 est réalisé par exemple, comme représenté sur la figure 6, à l'aide d'une plaque métallique 24, avantageusement en cuivre, en forme de portion droite de cylindre circulaire dont la hauteur est sensiblement égale à celle des faces frontales extérieures des plaques 22, et dont le diamètre est tel que cette plaque 24 vienne en contact avec lesdites faces frontales extérieures 22 sur lesquelles elle est brasée. Sur la face extérieure de la plaque 24, on soude un ou plusieurs tubes 25 parcourus par un fluide réfrigérant approprié. Bien entendu, la plaque 24 et les tubes 25 ne forment pas des spires continues, afin de ne pas être les sièges de courants de Foucault.

On a représenté sur la figure 7 un mode de réalisation de l'ensemble inducteur plus élément magnétique de canalisation de flux particulièrement bien adapté à une exploitation industrielle dans des conditions d'ambiance difficiles telles que celles que l'on peut rencontrer dans les équipements de production de laine de verre modernes, notamment en ce qui concerne la température au voisinage du centrifugeur. Selon ce mode de réalisation, l'inducteur 4 et l'élément 7 ou 19 (en ferrite ou en tôle feuilletée) sont enfermés dans un coffrage 26 annulaire concentrique à l'axe du centrifugeur 1. Ce coffrage 26 se compose de deux portions droites de cylindres circulaires concentriques 27, 28 de même hauteur, en matériau réfractaire, bon isolant thermique et électrique, du type de celui utilisé pour réaliser le support 9 du mode de réalisation de la figure 4. Les deux cylindres 27 (intérieur) et 28 (extérieur) sont fixés sur un disque annulaire épais 29 réalisé avec le même matériau que le leur. Le diamètre intérieur du disque 29 est égal au diamètre intérieur du cylindre 27, et son diamètre extérieur est égal à celui du cylindre 28.

A l'intérieur du coffrage annulaire constitué par les éléments 27 à 29, on dispose l'inducteur 4 et l'élément magnétique 7 (ou 19). L'inducteur 4 est fixé sur le cylindre 27. Cet inducteur 4 peut comporter plusieurs spires toriques fixées les unes au-dessus des autres, à la base du cylindre 27. L'élément magnétique 7 (ou 19) est disposé à la partie supérieure de ce coffrage, sur un support 30. Ce support 30 est par exemple constitué d'un disque annulaire fixé sur le cylindre 28 et/ou sur le cylindre 27, à une hauteur telle que la partie supérieure de l'élément magnétique arrive au niveau de la face supérieure des cylindres 28 et 27. Le couvercle du coffrage est constitué par un disque métallique (par exemple en cuivre) annulaire fendu (toujours pour empêcher la formation de courants de Foucault) ayant sensiblement les mêmes diamètres que le disque 29. Ce disque 31 est en bon contact thermique avec l'élément 7. Ce disque 31 peut être associé à un cylindre fendu 32, en même métal que lui, entourant la face périphérique extérieure de l'élément 7. Dans le cas où l'élément magnétique est en tôles feuilletées, le couvercle 31 peut venir en contact des plaques 22, et jouer le rôle du dissipateur thermique 24 de la figure 6. On soude sur le couvercle 31 et/ou le cylindre 32 un échangeur thermique 33 du type de ceux des figures 4 à 6.

Sur le schéma simplifié de la figure 8, on a représenté un élément magnétique 34 entourant l'inducteur 4 sur toutes ses faces autres que celle en vis-à-vis du centrifugeur 1. Cet élément 34 réalisé en ferrite ou en tôles feuilletées, selon la fréquence du courant d'inducteur. S'il est en ferrite, il peut être soit moulé en une seule pièce, soit réalisé à partir de bâtons de ferrite disposés de façon appropriée, ou de disques annulaires et de cylindres de ferrite. Un tel élément magnétique peut avantageusement être disposé dans un coffrage tel que celui représenté sur la figure 7 et il est, bien entendu, associé à un dispositif de refroidissement tel que l'un de ceux décrits ci-dessus.

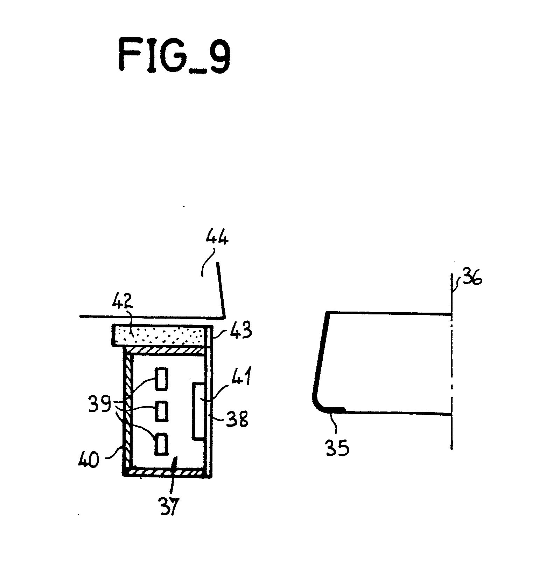

Le mode de réalisation représenté schématiquement sur la figure 9 utilise un centrifugeur 35 d'un diamètre maximal d'environ 310 mm, tournant autour d'un axe 36. Le centrifugeur 35 coopère avec un inducteur 37, alimenté, dans le cas présent, sous 800 volts à la fréquence de 10 kHz. L'inducteur 37 comporte une spire intérieure 38, en cuivre, à section droite rectangulaire, dont le grand côté est vertical, et trois spires extérieures 39, également en cuivre. Les spires 39 ont également une section droite rectangulaire, mais moins longue que celle de la spire 38. Ces trois spires 39 sont alignées verticalement à faible distance les unes des autres, leurs grands côtés étant verticaux.

La spire 39 centrale est sensiblement au niveau du milieu de la hauteur de la spire 38, ce milieu étant lui-même sensiblement au niveau du bas du centrifugeur 35. La hauteur (longueur du grand côté de la section droite) de la spire 38 est d'environ 60 mm, et cette spire est réalisée soit à partir d'un tube de cuivre, soit à partir d'un profilé plat en cuivre à la surface périphérique duquel on soude un tube 41 parcouru par un liquide de refroidissement. Les trois spires 39 sont électriquement en série avec la spire 38.

L'inducteur 37 est enfermé dans un coffrage annulaire 40, à section droite rectangulaire, dont la face en vis-à-vis du centrifugeur 35 est constituée par la spire 38 et dont les autres faces sont constituées de plaques en matériau isolant, par exemple tel que celui utilisé pour les plaques 27 à 29 du mode de réalisation de la figure 7.

Sur la face supérieure du boîtier 40, on dispose une couronne 42 en matériau magnétique, de préférence en ferrite. Cette couronne 42 peut être réalisée selon l'un des modes de réalisation décrits ci-dessus en référence aux figures 4, 5 ou 6. La surface périphérique intérieure de la couronne 42 est protégée thermiquement par une couronne 43 en matériau isolant, par exemple tel que celui constituant les parties isolantes du boîtier 40, la couronne 43 ayant sensiblement le même diamètre intérieur que la couronne constituée par la spire 38. La couronne de soufflage 44 est située au-dessus de la couronne 42.

L'un des avantages du mode de réalisation de la figure 9 est que la paroi constituée par la spire 38, en vis-à-vis du centrifugeur 35, n'est pas en matière isolante sur laquelle la fibre de verre risquerait de s'accrocher en obstruant le passage entre le centrifugeur et l'inducteur, mais en cuivre sur lequel la fibre n'accroche pratiquement pas.

Bien entendu, si le centrifugeur 35 est plus grand, ou si la fréquence de la tension d'alimentation de l'inducteur est plus basse (par exemple 3kHz), le nombre de spires extérieures de l'inducteur peut être différent, la spire 38 n'étant pas modifiée. Les spires 39 peuvent être au nombre de 2 ou 1 ou même ne pas exister.

Des essais effectués avec une installation telle que celle décrite ci-dessus en référence à la figure 9, avec et sans la couronne de ferrite 42 ont donné les résultats suivants (puissance envoyée à l'inducteur), le centrifugeur ayant un diamètre maximal de 310 mm, pour un même résultat thermique sur la paroi latérale perforée du centrifugeur :

    - sans ferrite : 20 kW
    - avec ferrite : 11 kW

soit un gain d'énergie proche de 50 %.

De plus, en optimisant les dispositions relatives du dispositif de chauffage principal, de l'inducteur et du centrifugeur, on peut, en envoyant 20 kW à l'inducteur, chauffer à 950° C les 2/3 de la surface latérale perforée du centrifugeur, au lieu de 1/3 sans ferrite, et dans certains cas, le chauffage par induction peut devenir le chauffage principal, alors que le chauffage à brûleur à gaz devient le chauffage d'appoint.

12

REVENDICATIONS

1. Inducteur à culasse magnétique pour équipement de fabrication de fibres de verre du type à centrifugeur (1) et à dispositif de chauffage principal (3) à gaz et dispositif de chauffage d'appoint par induction (4), à inducteur annulaire, caractérisé par le fait qu'il comporte un élément magnétique (7) de canalisation de flux d'inducteur (4) canalisant au moins une partie du flux de fuite vers le centrifugeur (1) de l'équipement, cet élément magnétique étant en un matériau peu dissipatif en énergie à la fréquence du courant alimentant l'inducteur.

2. Inducteur selon la revendication 1, caractérisé par le fait que l'élément magnétique est disposé au moins entre le dispositif de chauffage principal et l'inducteur, de façon à ne pratiquement pas gêner ni le fonctionnement du dispositif de chauffage principal, ni l'écoulement des fibres de verre sortant du centrifugeur.

3. Inducteur selon l'une des revendications 1 ou 2, caractérisé par le fait que l'élément magnétique (34) entoure l'inducteur sur toutes ses faces autres que celle en vis-à-vis du centrifugeur.

4. Inducteur selon l'une quelconque des revendications précédentes, caractérisé en ce que l'élément magnétique est réalisé sous forme de couronne dont l'axe est pratiquement confondu avec l'axe de rotation du centrifugeur, le diamètre intérieur de cette couronne étant sensiblement égal au diamètre intérieur de l'inducteur.

5. Inducteur selon l'une quelconque des revendications précédentes, caractérisé par le fait que l'élément magnétique est relié en bon contact thermique à un mélangeur thermique (10, 12).

6. Inducteur selon l'une quelconque des revendications précédentes, alimenté par un courant ayant une fréquence supérieure à environ 5 kHz, caractérisé par le fait que l'élément magnétique est à base de ferrite (8).

7. Inducteur selon l'une quelconque des revendications 1 à 5, alimenté par un courant ayant une fréquence inférieure à environ 5 kHz, caractérisé par le fait que l'élément magnétique est réalisé en tôles feuilletées disposées radialement (19).

8. Inducteur selon la revendication 7, caractérisé par le fait que les tôles sont groupées en paquets de tôles (20) séparés par des plaques métalliques en forme de coins (22), avec lesquelles ils sont en bon contact thermique, ces plaques étant reliées à un échangeur thermique (23).

9. Inducteur selon l'une quelconque des revendications précédentes, caractérisé par le fait que l'élément magnétique est disposé dans un coffrage (9, 13 ou 26) en matériau réfractaire bon isolant électrique et thermique.

10. Inducteur selon la revendication 9, caractérisé par le fait que le coffrage (26) renferme également l'inducteur (4).

0173618

FIG_1

3

5

6

4

1

2

FIG_2

3

5

1

4

FIG_3

3

5

7

1

4

0173618

FIG_4

FIG_5

FIG_6

FIG_8

FIG_7

# FIG_9

Office européen
des brevets

**RAPPORT DE RECHERCHE EUROPEENNE**

0173618

Numero de la demande

EP 85 40 1590

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl 4) |
|---|---|---|---|
| A | FR-A-1 270 748 (OWENS-CORNING FIBERGLASS) <br> * Page 1, colonne de droite, alinéa 2; page 4, colonne de gauche, lignes 17-44; page 5, colonne de droite, lignes 27-36; page 6, colonne de gauche, dernièr alinéa, colonne de droite, alinéa 1; figures 2,4 * | 1-4 | H 05 B 6/10 <br> C 03 B 37/04 |
| | --- | | |
| A | FR-A- 843 248 (ELECTRIC FURNACE CO.) <br> * Page 1, lignes 14-21,33-39; page 4, lignes 78-89; page 5, lignes 92-99; page 6, lignes 42-48; figures 13,15 * | 1,3,5 | |
| | --- | | |
| A | FR-A-1 241 786 (SAINT-GOBAIN) <br> * Page 1, colonne de droite, lignes 27-32; page 2, colonne de gauche, dernier alinéa, colonne de droite, lignes 1-13; figure 3 * | 1 | DOMAINES TECHNIQUES RECHERCHES (Int. Cl.4) <br><br> H 05 B 6/00 <br> C 03 B 37/00 |
| | --- | | |
| A | FR-A-1 169 358 (SAINT-GOBAIN) <br> * Page 1, colonne de droite, lignes 7-11; page 2, colonne de gauche, alinéa 2, lignes 25-39; figure 3 * | 1 | |
| | --- -/- | | |

Le présent rapport de recherche a été établi pour toutes les revendications

| Lieu de la recherche | Date d'achèvement de la recherche | Examinateur |
|---|---|---|
| LA HAYE | 07-11-1985 | RAUSCH |

0173618

Office européen
des brevets

**RAPPORT DE RECHERCHE EUROPEENNE**

Numero de la demande

EP   85 40 1590

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| A | DE-C- 968 717 (DEUTSCHE EDELSTAHLWERKE) * Page 1, lignes 1-14; page 2, lignes 22-41,62-104; page 4, ligne 93 - page 5, ligne 9; figures 7,8 * | 4,5,7, 8 | |
| A | FR-A-1 392 309 (DEUTSCHE EDELSTAHLWERKE) * Page 1, colonne de gauche, lignes 1-4, colonne de droite, lignes 2-5,28-30; figure 1 * | 5,6 | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 07-11-1985 | RAUSCH R. G. |